# EUROPÄISCHE PATENTANMELDUNG

(11) **EP 4 818 535 A1**
(43) Veröffentlichungstag der Anmeldung: **07.10.2026**
(21) Anmeldenummer: 26167686.0
(22) Anmeldetag: 25.03.2026
(51) Int. Cl.: F16B 19/00

(54) **VERBINDUNGSELEMENT UND VERFAHREN ZUM VERBINDEN VON ZWEI WERKSTÜCKEN**

(30) Priorität: 04.04.2025 DE 102025113374
(71) Anmelder: Atlas Copco IAS GmbH, 75015 Bretten (DE)
(72) Erfinder: JEPPS, Lewis, Flintshire, CH5 2NX (GB); BRISKHAM, Dr. Paul, Flintshire, CH5 2NX (GB)
(74) Vertreter: Ter Meer und Partner mbB

(57) **Zusammenfassung**

Es wird ein Verbindungselement zum Verbinden von zwei Werkstücken sowie ein dazu korrespondierendes Verfahren bereitgestellt. Das Verbindungselement umfasst einen Kopf und einen zylindrischen Schaft, der sich von einer Unterseite des Kopfes erstreckt. Der Schaft umfasst einen Basisabschnitt, der sich von der Unterseite des Kopfes erstreckt. Der Schaft umfasst einen Spitzenabschnitt, der ein dem Kopf gegenüberliegendes Ende des Schafts bildet. Der Schaft umfasst ferner einen Rippenabschnitt zwischen dem Basisabschnitt und dem Spitzenabschnitt. Der Rippenabschnitt umfasst mehrere Rippen.

## Beschreibung

### Technisches Gebiet

Die vorliegende Erfindung betrifft ein Verbindungselement zum Verbinden, insbesondere lochbildenden Verbinden, von zumindest zwei Werkstücken, ein dazu korrespondierendes Verfahren und eine Verwendung des Verbindungselements in einem lochbildenden Verbindungsverfahren, insbesondere Fließlochfügeverfahren bzw. Fließlochschraubverfahren.

### Technischer Hintergrund

Verbindungselemente sind bekannt und werden verwendet, um Werkstücke, Elemente bzw. Bauteile miteinander zu verbinden. Bei gewindeformenden Verbindungselementen wird vor der Verbindung kein Material aus einem Werkstück entfernt, um ein Gewinde für das Verbindungselement zu erzeugen, sondern das Material des Werkstücks wird so geformt oder verformt, dass das Gewinde in dem Werkstück entsteht. Beim Einsetzen eines gewindeformenden Verbindungselements wird jedoch eine kleine Menge an Material vom Werkstück entfernt. Einige gewindeformende Verbindungselemente sind auch in der Lage, ein Loch in dem Werkstück zu formen, in dem das Verbindungselement angeordnet wird. Das Loch kann gleichzeitig mit dem Gewinde geformt werden. Gewindeformende Verbindungselemente, die auch Löcher formen bzw. bilden können, können als gewindeformende und lochformende bzw. lochbildende Verbindungselemente bezeichnet werden.

Um ein lochbildendes Verbindungselement in ein Werkstück einzuführen, wird das Befestigungselement gedreht, während es in Kontakt mit einem ersten Werkstück ist, sodass das erste Werkstück und mittelbar das zweite Werkstück erwärmt wird. Anschließend wird das Verbindungselement in das erste Werkstück eingeführt, durch das erste Werkstück gedrückt und in das zweite Werkstück eingeführt. Das mit einem Gewinde versehene Verbindungselement wird während des gesamten Verbindungsvorgangs gedreht. Dadurch wird ein Gewinde in den Werkstücken geformt.

Das Verbindungselement und die zu verbindenden Werkstücke können so aufeinander abgestimmt sein, dass eine Oberfläche des zweiten Werkstücks nicht von dem Verbindungselement durchstoßen wird. Im Bereich des Verbindungselements bildet sich dann in der nicht-durchstoßenen Oberfläche eine Ausbeulung.

WO 2023 214 164 A1 offenbart ein gewindeformendes und lochformendes Verbindungselement. Das Verbindungselement umfasst einen Kopf und einen Schaft, der eine Längsachse definiert. Der Schaft umfasst einen Schaftabschnitt und einen Spitzenabschnitt. Der Schaftabschnitt erstreckt sich vom Kopf aus. Der Spitzenabschnitt erstreckt sich vom Schaftabschnitt aus und ist dem Kopf gegenüberliegend angeordnet. Zumindest ein Teil des Schaftabschnitts ist mit einem Gewinde versehen.

Es hat sich herausgestellt, dass beim Einsetzen des gewindeformenden Verbindungselements der Anfang des Gewindeabschnitts des Verbindungselements wie ein Messer wirken kann und lange, fadenförmige Materialspäne erzeugen kann. Diese Späne können sich um den Kopf des Verbindungselements wickeln und das vollständige Einsetzen des Verbindungselements verhindern.

Bei Zerspanungswerkzeugen ist zur Zerkleinerung von Spänen bekannt, einen sog. Spanbrecher anzuordnen, der die Späne veranlasst sich zu krümmen und zu brechen.

Die Späne, die im Zuge eines lochbildenden Verbindungsverfahrens, insbesondere Fließlochschraubverfahren, entstehen können, lassen sich jedoch nur schwer in kleinere Stücke brechen bzw. zerteilen, da sie in einem heißen Prozess entstehen, und daher sehr dehnbar sind.

DE 10 2010 046 318 A1 betrifft ein Fügeelement, das kein Gewinde aufweist, jedoch während des Fügeprozesses selbst verformt werden muss, um eine sichere Fügeverbindung zwischen zweit aneinander liegenden Fügeteilen zu erzeugen.

KR 10 2004 0090612 A betrifft ein Nietverfahren, bei dem das Material örtlich geschmolzen wird. Das Nietverfahren wird als zweiseitiges Fügeverfahren ausgeführt.

WO 02/062518 A1 betrifft ein Befestigungselement, das sich zusammen mit dem Werkstück verformt, unter Verwendung eines Materials mit ähnlicher Härte.

### Zusammenfassung der Erfindung

Es besteht daher Bedarf an einem Verbindungselement, das die vorstehend beschriebenen Probleme aus dem Stand der Technik zumindest teilweise reduziert. Weiter ist es eine Aufgabe, ein Verbindungselement anzugeben, bei dessen Verwendung lange Materialspänen beim Fließlochfügen vermieden werden können. Ferner ist es eine Aufgabe, ein Verbindungselement anzugeben, das eine sicherere Verbindung zweier Werkstücke gewährleistet. Zudem besteht Bedarf an einem zum Verbindungselement korrespondierendem Verfahren.

Zumindest eines der vorstehenden technischen Aufgaben wird durch ein Verbindungselement bzw. durch ein Verbindungsverfahren gemäß den unabhängigen Ansprüchen gelöst. Weitere Ausgestaltungen sind in den abhängigen Ansprüchen angegeben.

In einem unabhängigen Aspekt der Erfindung ist ein Verbindungselement zum Verbinden von zwei Werkstücken bereitgestellt. Das Verbindungselement umfasst einen Kopf und einen zylindrischen Schaft, der sich von einer Unterseite des Kopfes erstreckt. Der Schaft umfasst einen Basisabschnitt, der sich von der Unterseite des Kopfes erstreckt. Der Schaft umfasst einen Spitzenabschnitt, der ein dem Kopf gegenüberliegendes Ende des Schafts bildet. Der Schaft umfasst ferner einen Rippenabschnitt zwischen dem Basisabschnitt und dem Spitzenabschnitt. Der Rippenabschnitt umfasst mehrere Rippen.

In einem weiteren unabhängigen Aspekt der Erfindung ist ein Verbindungselement zum lochbildenden Verbinden von zwei Werkstücken bereitgestellt. Das Verbindungselement umfasst einen Kopf und einen zylindrischen Schaft, der sich von einer Unterseite des Kopfes erstreckt. Der Schaft umfasst einen Basisabschnitt, der sich von der Unterseite des Kopfes erstreckt. Der Schaft umfasst einen Spitzenabschnitt, der ein dem Kopf gegenüberliegendes Ende des Schafts bildet. Der Schaft umfasst ferner einen Rippenabschnitt zwischen dem Basisabschnitt und dem Spitzenabschnitt. Der Rippenabschnitt umfasst mehrere Rippen, wobei jede Rippe in jeweils einer Ebene liegend den Schaft umgibt und einen konstanten Rippenvorsprung aufweist. Die Ebenen sind jeweils parallel zueinander. Der Rippenabschnitt bedeckt zumindest 30% des Schafts.

In einem weiteren unabhängigen Aspekt der Erfindung wird ein Verfahren zum lochbildenden Verbinden von zwei Werkstücken bereitgestellt. Das Verfahren umfasst: Bereitstellen eines ersten Werkstücks, eines zweiten Werkstücks und eines Verbindungselements gemäß einem Aspekt der vorliegenden Offenbarung; Aufsetzen des Verbindungselements auf eine Oberfläche des ersten Werkstücks; Rotieren des Verbindungselements mit einer vorbestimmten Drehzahl; und Ausüben einer vorbestimmten axialen Kraft auf das Verbindungselement in Richtung der Oberfläche des ersten Werkstücks.

In einem weiteren unabhängigen Aspekt der Erfindung wird eine Verwendung eines Verbindungselements nach einem der Aspekte der vorliegenden Offenbarung in einem Fließlochfügeverfahren bereitgestellt.

Der Kern der Erfindung liegt darin, zumindest einen wesentlichen Teil des Schafts, bspw. mindestens 30%, durch mehrere parallele Rippen eines Rippenabschnitts zu bedecken, anstatt des üblicherweise vorgesehenen Gewindes. Das Verbindungselement verliert dadurch zumindest teilweise seinen Schraubencharakter. Im Gegensatz zur Rille eines Gewindes sind die Rillen zwischen zwei jeweils benachbarten Rippen bzw. Rippenvorsprüngen auf eine Umfangslänge des Schafts begrenzt. Dadurch werden bei einem lochbildenden Verbindungsverfahren von Haus aus kürzere Späne erzeugt als bei einem Gewinde. Trotz dem zumindest teilweisen Ersetzen des Gewindes kann das Verbindungselement weiterhin in einseitigen Fügeverfahren, wie bspw. dem Fließlochfügeverfahren, eingesetzt werden. Weder die mehreren Rippen noch die dazwischen ausgebildeten Rillen weisen eine Spiralform auf. Dadurch kann eine Spanfläche, wie bspw. bei einem Gewinde, vermieden werden. Experiment haben ergeben, dass die Funktionalität des Verbindungselements gegenüber einem Verbindungselement mit Gewinde, wie z. B. in der WO 2023/214164 A1 beschrieben, erhalten bleibt. Das verformte Material der zwei Werkstücke kann in die Rillen zwischen jeweils zwei benachbarten Rippen einfließen. Es hat sich ferner gezeigt, dass die mehreren Rippen eine mit einem Gewinde vergleichbare Verriegelungsschnittstelle in der Verbindung der zwei Werkstücke gewährleisten und zusätzlich das Risiko eines unvollständigen Einsetzens des Verbindungselements reduzieren sowie vor Vibrationslockerungen schützen können. Mit anderen Worten kann durch das zumindest teilweise Ersetzen des Gewindes eines Verbindungselements durch mehrere Rippen verhindert werden, dass das Gewinde als Schneidevorrichtung fungiert und lange, fadenförmige Materialreste erzeugt, und dass sich das Verbindungselement schwingungsbedingt löst oder manipuliert wird. Aufgrund der nichtspiralförmigen Rillen zwischen den mehreren Rippen können etwaige geformte Materialfäden nicht abgezogen werden und z. B. den Kopf des Verbindungselement umwickeln.

Das Verbindungselement und/oder das Verfahren bzw. die Verwendung des Verbindungselement kann ferner ein oder mehrere der folgenden Merkmale umfassen:

Jede Rippe des Rippenabschnitts kann in jeweils einer Ebene den Schaft umgeben.

Wenigstens eine der Rippen kann im Wesentlichen rechtwinklig zur Schaftachse verlaufen.

Jede Rippe des Rippenabschnitts kann einen konstanten Rippenvorsprung und/oder konstanten Rippendurchmesser aufweisen.

Die Rippen können jeweils parallel zueinander ausgebildet sein. Ebenen, in denen die Rippen den Schaft umlaufen, können jeweils parallel zueinander ausgerichtet sein.

Der Rippenabschnitt kann zumindest 30% des Schafts bedecken, vorzugsweise 50% des Schafts bedecken.

Der Rippenabschnitt kann den Schaft zwischen dem Basisabschnitt und dem Spitzenabschnitt vollständig abdecken. Der Rippenabschnitt kann einen Bereich zwischen dem Basisabschnitt und dem Spitzenabschnitt vollständig bedecken. Der Schaft kann zwischen dem Basisabschnitt und dem Spitzenabschnitt vollständig gerillt sein, d. h., keinen glatten Abschnitt aufweisen. Der Rippenabschnitt kann zumindest 40%, vorzugsweise zumindest 50%, weiter bevorzugt zumindest 60% des Schafts zwischen dem Basisabschnitt und dem Spitzenabschnitt abdecken. Alle Rippen des Rippenabschnitts können parallel zueinander in jeweils einer Ebene liegend den Schaft umgeben, insbesondere vollständig umgeben, und jeweils einen konstanten Rippenvorsprung aufweisen bzw. einen gleichen Rippendurchmesser aufweisen. Der Rippendurchmesser kann einem Außendurchmesser des Schafts entsprechen bzw. gleichen.

Die zwei Werkstücke können jeweils flache Werkstücke sein, die durch eine plane Kontaktfläche einander direkt kontaktieren können. Das Verbindungselement wird vorzugsweise im Bereich der planen Kontaktfläche in die zwei aufeinander angeordneten Werkstücke eingebracht bzw. eingesetzt.

Der Schaft kann aus einem Material gebildet sein, das härter ist, vorzugsweise mindestens 50% härter ist als die Materialien der zwei Werkstücke. Mit dem Begriff "Härte" ist ein mechanischer Widerstand bezeichnet, den ein Material bzw. die Werkstücke der mechanischen Eindringung eines anderen Körpers, z. B. des Verbindungselements, entgegensetzt. Durch diesen Härteunterschied zwischen dem Schaft und den zu verbindenden Werkstücken kann eine bessere Kontrolle der Materialverschiebung in den Werkstücken sowie eine stärkere Verbindung der zwei Werkstücke gewährleistet werden.

Der Basisabschnitt kann in einem Bereich, der an den Rippenabschnitt angrenzt, einen Durchmesser aufweisen, der dem Durchmesser der Rippen bzw. des Rippenabschnitts entspricht bzw. gleicht. Der Spitzenabschnitt kann in einem Bereich, der an den Rippenabschnitt angrenzt, einen maximalen Durchmesser aufweisen. Der maximale Durchmesser des Spitzenabschnitts kann kleiner als der Durchmesser der Rippen bzw. des Rippenabschnitts sein. Mit anderen Worten kann sich eine äußere Hülle des Schafts im Übergang vom Rippenabschnitt zum Spitzenabschnitt verjüngen. Dadurch kann die Materialverdrängung im ersten Werkstück und/oder zweiten Werkstück verbessert werden.

Ein konstanter Rippenvorsprung kann bedeuten, dass die Rippe in Umlaufrichtung um den Schaft die gleiche Höhe in Bezug auf den Schaft hat. Jede Rippe kann einen kreisrunden Querschnitt aufweisen. Jede Rippe kann rotationssymmetrisch in Bezug auf die Rotationsachse des Verbindungselements sein. Der Schaft kann einen kreisrunden Querschnitt aufweisen und/oder rotationssymmetrisch in Bezug auf die Rotationsachse des Verbindungselements sein.

Das Verbindungselement kann einseitig in die zwei Werkstücke eingesetzt werden, also ohne Unterstützung einer zweiten Komponente auf einer dem Verbindungselement in Bezug auf die zwei Werkstücke gegenüberliegenden Seite.

Das Verbindungselement kann ferner einen Gewindeabschnitt aufweisen, der zwischen dem Rippenabschnitt und dem Basisabschnitt angeordnet ist. Der Gewindeabschnitt kann ein Gewinde, insbesondere ein Außengewinde, aufweisen. Der Gewindeabschnitt kann am Schaft in axialer Richtung näher zum Kopf ausgebildet sein, als der Rippenabschnitt. Der Rippenabschnitt kann sich direkt an den Spitzenabschnitt anschließen. Dadurch können lange Materialspäne ebenso effektiv vermieden werden, wobei der Gewindeabschnitt in einem Bereich nahe dem Kopf des Verbindungselement, eine zusätzliche Klemmwirkung erzeugen kann. Vorteilhafterweise ist eine Breite des Gewindeabschnitts entsprechend, insbesondere gleich, einer Dicke des ersten Werkstücks gewählt. Dadurch kann der Gewindeabschnitt in der ausgebildeten Verbindung das erste Werkstück gegenüber dem zweiten Werkstück effektiver sichern.

Die Rippen können ein symmetrisches Rippenprofil aufweisen. Jede Rippe kann ein symmetrisches Rippenprofil aufweisen. Der Begriff "Rippenprofil" bezieht sich auf einen Längsschnitt durch ein oder mehrere aneinander liegende Rippenvorsprünge. Jede Rippe bzw. jeder Rippenvorsprung kann eine erste Flanke und eine zweite Flanke aufweisen. Ein symmetrisches Rippenprofil kann bedeuten, dass die erste Flanke im Längsschnitt spiegelsymmetrisch zur zweiten Flanke ist. Als Spiegelebene kann die Ebene dienen, in der die jeweilige Rippe ausgebildet ist. Die Spiegelebene kann senkrecht zu einer Rotationsachse des Verbindungselements liegen oder die Rotationsachse in einem Winkel ungleich 90° schneiden.

Die Rotationsachse des Verbindungselements kann koaxial zur Längsachse des Schafts verlaufen.

Die Rippen können ein asymmetrisches Rippenprofil aufweisen. Jede Rippe kann ein asymmetrisches Rippenprofil aufweisen. Eine erste Flanke des Rippenvorsprungs kann dem Kopf zugewandt sein. Eine zweite Flanke des Rippenvorsprungs kann dem Spitzenabschnitt zugewandt sein. Die erste Flanke kann eine Ebene, die beide Flanken schneidet und parallel zur Rippe verläuft, in einem ersten Winkel schneiden. Der erste Winkel kann kleiner oder größer als ein zweiter Winkel sein, in dem die zweite Flanke die Ebene schneidet. Mit anderen Worten können die Rippen im Längsschnitt eine Sägezahnform aufweisen. Das asymmetrische Rippenprofil kann den Materialfluss in den zwei Werkstücken bzw. die Materialverdrängung in den zwei Werkstücken verbessern und die Auszugs- bzw. Ausreißfestigkeit erhöhen.

Der Rippenabschnitt, einzelne Rippen und/oder jede Rippe kann in einem Längsschnitt eine Trapezform aufweisen. Alternativ, oder zusätzlich, können der Rippenabschnitt, einzelne Rippen und/oder jede Rippe im Längsschnitt eine Rundform, eine Sägezahnform und/oder eine Dreiecksform aufweisen.

Zwischen jeweils zwei Rippen kann eine umlaufende Rille ausgebildet sein. Jede Rille kann eine konstante Rillentiefe aufweisen. Die Rillentiefen können entlang einer axialen Richtung des Schafts variieren, insbesondere in Richtung des Spitzenabschnitts zunehmen. Das kann bedeuten, dass zwischen zwei Rippen, die näher zum Spitzenabschnitt positioniert sind als zwei weitere benachbarte Rippen, eine tiefere Rille ausgebildet ist also zwischen den zwei weiteren benachbarten Rippen. Ein Außendurchmesser der Rippen kann für alle Rippen gleich sein. Ein Durchmesser des Schafts kann in axialer Richtung variieren, insbesondere konisch verlaufen bzw. sich verjüngen. Daraus können sich unterschiedliche Rillentiefen für verschiedene axiale Positionen der Rillen ergeben.

Die Rippenvorsprünge bzw. die Rippen können in einem Längsschnitt eine erste runde Form aufweisen und/oder Rillen in dem Längsschnitt können zwischen den Rippen eine zweite runde Form aufweisen. Die zweite runde Form kann eine der ersten runden Form entgegengesetzte Krümmung aufweisen. Die erste runde Form und die zweite runde Form können eine betragsmäßig gleiche bzw. identische Krümmung aufweisen. Mit anderen Worten können die Rippen und/oder die Rillen verrundet bzw. abgerundet sein.

Zwischen jeweils zwei Rippen kann eine Rille mit einer ersten Rillenbreite ausgebildet sein. Zumindest eine der Rillen kann eine zweite Rillenbreite aufweisen, die größer als die erste Rillenbreite ist. Eine der Rillen mit der zweiten Rillenbreite kann vorzugsweise den Spitzenabschnitt mit dem Rillenabschnitt verbinden. Mit anderen Worten können die Rillen des Rippenabschnitts eine Mischung aus großen und kleinen Rillen aufweisen. Es kann vorteilhaft sein, wenn der Spitzenabschnitt und der Rippenabschnitt durch eine im Vergleich zu den anderen Rillen größere Rille, d. h., breitere und/oder tiefere Rille, verbunden ist, um den Eindringwiderstand des Verbindungselements in die zwei Werkstücke zu reduzieren.

Die Rotationsachse des Verbindungselements kann die Ebenen der Rippen senkrecht oder in einem Winkel ungleich 90 Grad schneiden. Das bedeutet, dass die Rippen des Rippenabschnitts horizontal oder schräg positioniert sein können, jedoch nicht gemischt horizontal und schräg. Schräg positionierte Rippen unterscheiden sich von einem Gewinde dadurch, dass zwischen den mehreren Rippen jeweils separate Rillen gebildet sind, während das Gewinde nur eine einzige Rille aufweist.

Der Spitzenabschnitt kann keine Rillen, kein Gewinde und keine Rippen aufweisen.

Der Kopf kann ferner eine Hinterschneidung aufweisen. Die Hinterschneidung kann an den Schaft angrenzen und sich insbesondere um diesen herum erstrecken. Die Hinterschneidung kann eingerichtet sein, bei der Verwendung des Verbindungselements Material von dem ersten Werkstück und/oder dem zweiten Werkstück aufzunehmen.

Der Kopf kann ferner eine Sechskantvorrichtung aufweisen, mittels der ein Fügewerkzeug ein Drehmoment auf das Verbindungselement übertragen kann.

Der Spitzenabschnitt kann eine konische Form aufweisen, um beim Aufsetzen auf die Oberfläche des ersten Werkstücks eine möglichst große Kontaktfläche mit dem ersten Werkstück auszubilden. Durch eine Rotation des Verbindungselements und unter Ausüben einer axialen Kraft auf das Verbindungselement wird eine Reibung zwischen dem Verbindungselement und dem ersten Werkstück verursacht. Das Verbindungselement dringt in Abhängigkeit der axialen Kraft und in Abhängigkeit der Materialeigenschaften des ersten Werkstücks in das erste Werkstück ein. Wenn das Verbindungselement so tief in das erste Werkstück bzw. in das erste Werkstück und das zweite Werkstück eingedrungen ist, dass die Rillen des Rillenabschnitts in Kontakt mit dem ersten Werkstück geraten, wird bei einem weiteren Eindringen des Verbindungselements ein zu den Rillen des Rillenabschnitts korrespondierendes Rillenprofil in dem ersten Werkstück und/oder in dem zweiten Werkstück gebildet.

Durch das Rotieren des Verbindungselements erwärmt sich das erste Werkstück und darüber das zweite Werkstück. Das Rotieren ist dabei konfiguriert, das erste Werkstück und/oder das zweite Werkstück nur auf Prozesstemperaturen von etwa 300 °C zu erwärmen. Das erste Werkstück und/oder das zweite Werkstück kann Aluminium, das eine Schmelztemperatur von 660°C aufweist, umfassen. Es kann sichergestellt sein, dass die Prozesstemperatur unter der Schmelztemperatur des ersten Werkstücks und/oder des zweiten Werkstücks bleibt, also kein Schmelzen des ersten Werkstücks bzw. des zweiten Werkstücks erfolgt. Dadurch bleibt das Material des ersten Werkstücks und/oder des zweiten Werkstücks im Bereich der Warmumformung um und unter der Rekristallisationstemperatur, wodurch die mit der Warmumformung verbundenen Probleme wie Kornwachstum und der Verlust lokaler mechanischer Eigenschaften vermieden werden, während gleichzeitig die Duktilität im Vergleich zur Kaltumformung verbessert wird.

Bevorzugt weist das erste Werkstück und/oder das zweite Werkstück kein Loch in einem axial mit der Rotationsachse des Verbindungselements fluchtenden Bereich des ersten bzw. zweiten Werkstücks auf, bevor oder wenn das Verbindungselement auf die Oberfläche des ersten Werkstücks aufgesetzt wird. D. h., das Verbindungselement kann ohne ein Vorlochen des ersten und/oder zweiten Werkstücks in das erste und zweite Werkstück eingebracht werden.

Der Spitzenabschnitt kann von dem ersten und/oder zweiten Werkstück umgeben sein, wenn das erste und zweite Werkstück miteinander verbunden sind. Insbesondere kann der Spitzenabschnitt von dem ersten und/oder zweiten Werkstück umgeben sein, wenn das Verbindungselement in seine endgültige Tiefe in das erste und zweite Werkstück eingedrungen ist. Wenn das erste und zweite Werkstück miteinander verbunden sind oder wenn das Verbindungselement in seine endgültige Tiefe in das erste und zweite Werkstück eingedrungen ist, kann der Spitzenabschnitt nicht aus dem ersten und/oder zweiten Werkstück herausragen. Der Spitzenabschnitt kann zumindest teilweise von einer in dem zweiten Werkstück gebildeten Ausbeulung umgeben sein. Wenn das erste und zweite Werkstück miteinander verbunden sind oder wenn das Verbindungselement in seine endgültige Tiefe in das erste und zweite Werkstück eingedrungen ist, kann eine Oberfläche des zweiten Werkstück nicht von dem Verbindungselement durchstoßen sein.

Das erste Werkstück und/oder das zweite Werkstück kann ein Bauteil sein. Insbesondere kann das erste Werkstück und/oder das zweite Werkstück Metall umfassen oder aus Metall bestehen. Bevorzugt ist das erste Werkstück ein Metallelement oder ein Metallbauteil, insbesondere eine Stahlelement oder ein Stahlbauteil. Das erste Werkstück kann ebenso ein Aluminiumbauteil sein. Das Aluminiumbauteil kann aus einer AA5000-, AA6000- oder AA7000-Legierung bestehen oder eine solche umfassen. Das zweite Werkstück kann ein Metallelement oder ein Metallbauteil, insbesondere ein Aluminiumelement oder Aluminiumbauteil sein. Besonders bevorzugt ist das zweite Werkstück ein Aluminium-Druckguss-Element. Das zweite Werkstück kann ein nicht-wärmebehandeltes Aluminium-Druckguss-Element sein. Ebenso kann das zweite Werkstück ein Aluminium-Druckguss-Element mit einem hohen Anteil an Sekundär-Aluminium, d.h. einem hohen Anteil an Recycling-Aluminium, sein. Das zweite Werkstück kann aus einer AA7000-Legierung bestehen oder eine solche umfassen.

### Kurzbeschreibung der Figuren

Im Folgenden werden die Erfindung oder weitere Ausführungsformen und Vorteile der Erfindung anhand von Zeichnungen näher erläutert, wobei die Zeichnungen nur Ausführungsformen der Erfindung beschreiben. Gleiche Bauteile sind in den Zeichnungen mit den gleichen Bezugszeichen versehen. Elemente, die mit gestrichelten Linien gezeichnet sind, werden als optionale Elemente betrachtet.
Fig. 1 zeigt ein eine perspektivische Seitenansicht eines ersten Beispiels eines Verbindungselements gemäß Ausführungsformen der Offenbarung.
Fig. 2a zeigt einen Längsschnitt durch das Verbindungselement aus Fig. 1.
Fig. 2b zeigt einen vergrößerten Bereich des Längsschnitts aus Fig. 2a.
Fig. 3a zeigt einen Längsschnitt durch ein zweites Beispiel des Verbindungselements gemäß Ausführungsformen der vorliegenden Offenbarung.
Fig. 3b zeigt einen vergrößerten Bereich des Längsschnitts aus Fig. 3a.
Fig. 4 zeigt einen Längsschnitt durch ein drittes Beispiel des Verbindungselements gemäß Ausführungsformen der vorliegenden Offenbarung.
Fig. 5 zeigt einen Längsschnitt durch ein viertes Beispiel des Verbindungselements gemäß Ausführungsformen der vorliegenden Offenbarung.
Fig. 6 zeigt einen Längsschnitt durch ein fünftes Beispiel des Verbindungselements gemäß Ausführungsformen der vorliegenden Offenbarung.
Fig. 7 zeigt einen Längsschnitt durch ein sechstes Beispiel des Verbindungselements gemäß Ausführungsformen der vorliegenden Offenbarung.
Fig. 8a zeigt eine perspektivische Seitenansicht eines siebten Beispiels des Verbindungselements gemäß Ausführungsformen der vorliegenden Offenbarung.
Fig. 8b zeigt einen Längsschnitt durch das Verbindungselement aus Fig. 8a.
Fig. 9a zeigt eine perspektivische Seitenansicht eines achten Beispiels des Verbindungselements gemäß Ausführungsformen der vorliegenden Offenbarung.
Fig. 9b zeigt einen Längsschnitt durch das Verbindungselement aus Fig. 9a.
Fig. 10 zeigt eine Aufnahme eines Längsschnitts durch ein Verbindungselement nach dessen Verwendung in einem Verfahren gemäß Ausführungsformen der Offenbarung.

### Ausführungsformen der Offenbarung

Im Folgenden werden, sofern nicht anders vermerkt, für gleiche und gleichwirkende Elemente gleiche Bezugszeichen verwendet. Die dargestellten Elemente sind nicht als maßstabsgerecht anzusehen, vielmehr können einzelne Elemente zum besseren Verständnis übertrieben groß dargestellt werden.

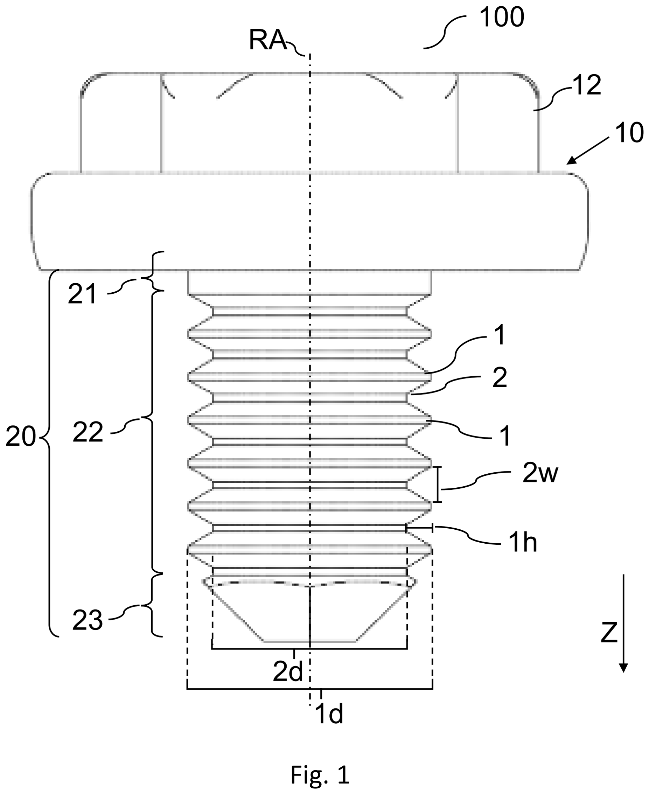

In Fig. 1 ist ein erstes Beispiel eines Verbindungselements 100 gemäß Ausführungsformen der Offenbarung dargestellt. Das Verbindungselement 100 weist einen Kopf 10 und einen Schaft 20 auf. Der Schaft 20 erstreckt sich von dem Kopf 10, genauer gesagt von einer Unterseite des Kopfes 10. Der Kopf kann eine Sechskantvorrichtung 12 aufweisen, zum Koppeln des Verbindungselements 100 mit einem Fügewerkzeug.

Der Schaft 20 im Beispiel der Fig. 1 lässt sich in drei Bereich gliedern. Direkt angrenzend an die Unterseite des Kopfes 10 und sich von diesem erstreckend ist ein Basisabschnitt 21 ausgebildet. Der Basisabschnitt 21 ist vorzugsweise rotationssymmetrisch in Bezug auf die Rotationsachse RA ausgebildet.

An den Basisabschnitt 21 angrenzend folgt in axialer Richtung Z ein Rippenabschnitt 22. Der Rippenabschnitt 22 weist mehrere Rippen 1 auf, wobei zwischen jeweils zwei direkt benachbarten Rippen 1 eine Rille 2 ausgebildet sein kann. Im Beispiel der Fig. 1 weisen die Rippen 1, genauer gesagt jede Rippe 1, eine Trapezform auf. In der Trapezform kann die kleinere Grundseite wesentlich kleiner als die größere Grundseite sein. Die Rippen 1 weisen einen Rippenvorsprung 1h auf, der auch als Rippenhöhe bezeichnet werden kann. Der Rippenvorsprung 1h bzw. die Rippenhöhe entspricht einer Rillentiefe. Die Rillen 2 weisen ferner eine Rillenbreite 2w auf, die zwischen den zwei Spitzen der eine Rille 2 bildenden Rippen 1 definiert sein kann. Im Beispiel der Fig. 1 sind alle Rippen 1 gleichartig ausgebildet. Die Rippen 1 sind jeweils parallel zueinander und senkrecht zur Rotationsachse RA ausgebildet. Jede Rippe 1, und daher der Rippenabschnitt 22 als solcher, hat einen Durchmesser 1d, der größer als ein (Innen-)Durchmesser 2d des Schafts 20 sein kann, der dem Durchmesser der Rillen 2 entspricht. Das Bezugszeichen "1d" bezeichnet also einen Rippendurchmesser und das Bezugszeichen "2d" einen Rillendurchmesser. Die Rillen 2, die Rippen 1 und der Rippenabschnitt 22 können rotationssymmetrisch zur Rotationsachse RA ausgebildet sein.

Der Basisabschnitt kann einen Durchmesser aufweisen, der dem Durchmesser 1d der Rippen 1 entspricht.

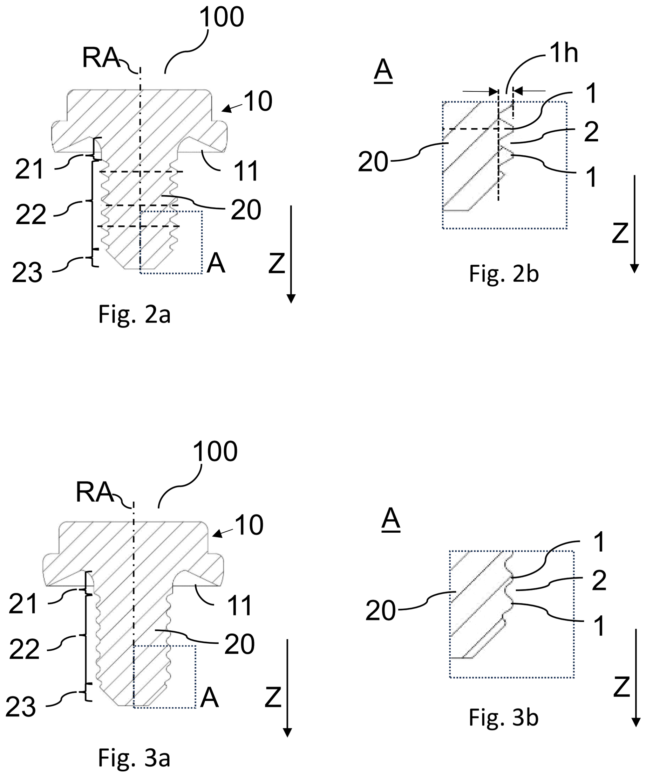

In Fig. 2a ist das Beispiel des Verbindungselements 100 aus Fig. 1 in einem Längsschnitt dargestellt.

Zur Verdeutlichung der parallelen Ebenen, in denen jeweils die Rippen 1 ausgebildet sind, sind in Fig. 2a gestrichelte Linien durch die Rippen 1 eingezeichnet.

In dem Längsschnitt der Fig. 2a ist im Vergleich zur Fig. 1 zusätzlich eine Hinterschneidung 11 des Kopfes 10 zu sehen, aus der der Basisabschnitt 21 sich erstreckt.

Ein Ausschnitt A des Schafts 20 ist in Fig. 2b gezeigt. Darin sind die Rippen 1 und die zwischen den Rippen 1 ausgebildeten Rillen 2 in der Längsschnittansicht hervorgehoben. Im Beispiel der Figs. 1, 2a und 2b kann jede Rippe 1 denselben Rippenvorsprung 1h aufweisen. In der Vergrößerung der Fig. 2b ist gut zu erkennen, dass der maximale Durchmesser des Spitzenabschnitts 23, der sich unmittelbar an den Rippenabschnitt 22 anschließt, kleiner als der Durchmesser 1d der Rippen 1, jedoch größer als der Durchmesser 2d der Rillen 2 sein kann. Dadurch kann der Spitzenabschnitt 23 gegenüber dem Rippenabschnitt 22 verjüngt sein.

In den Figs. 3a und 3b ist ein zweites Beispiel eines Verbindungselements 100 dargestellt. In Fig. 3b ist analog zur Fig. 2b ein vergrößerter Ausschnitt A aus Fig. 3a dargestellt.

Das Verbindungselement 100 im Beispiel der Figs. 3a und 3b hat im Vergleich zum Verbindungselement 100 im Beispiel der Figs. 1, 2a und 2b verrundete Rippen 1 und Rillen 2. Das bedeutet, dass im Längsschnitt der Rippenabschnitt 22 eine Rundform aufweist. Die Krümmung der runden Form der Rippen 1 kann im Wesentlichen entgegengesetzt der Krümmung der runden Form der Rillen 2 sein. Die übrigen Eigenschaften und Merkmale des Verbindungselements aus den Figs. 3a und 3b gilt das zu den Figs. 1, 2a und 2b Beschriebene analog.

In der Vergrößerung der Fig. 3b ist die Rundform des Rippenabschnitts 22 im Vergleich zur Trapezform der Fig. 2b herausgestellt.

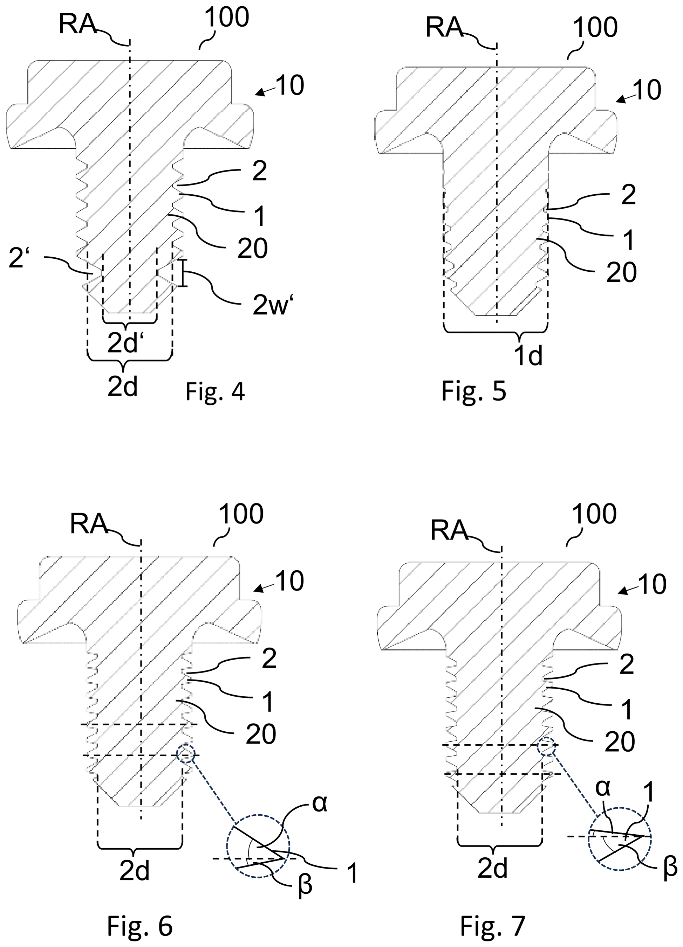

In Fig. 4 ist ein drittes Beispiel eines Verbindungselements 100 dargestellt. Im Beispiel der Fig. 4 kann sich im Vergleich zum Beispiel der Figs. 1, 2a und 2b der Rippenvorsprung 1h entlang der axialen Richtung Z variieren. D. h., in dieser Konfiguration können die Rillen 2, 2' verschiedene Rillendurchmessern 2d, 2d' und/oder verschiedenen Rillenbreiten 2w, 2w' aufweisen. Es können Rillen 2, 2' mit unterschiedlichen Rillendurchmessern 2d, 2d' und/oder unterschiedlichen Rillenbreiten 2w. 2w' im Rippenabschnitt 22 gemischt sein.

Zwischen jeweils zwei Rippen 1 können eine erste Rille 2 und eine zweite Rille 2' ausgebildet sein. Die erste Rille 2 kann eine erste Rillenbreite 2w aufweisen, die zweite Rille 2' kann eine zweite Rillenbreite 2w' aufweisen. Vorzugsweise sind der Spitzenabschnitt 23 und der Rippenabschnitt 22 durch eine zweite Rille 2' verbunden. Mit anderen Worten ist die in axialer Richtung Z letzte Rille 2 vorzugsweise eine zweite Rille 2'. Es ist weiter vorteilhaft, wenn zwei, drei oder vier zweite Rillen 2' ausgebildet sind, insbesondere in einer Hälfte des Rippenabschnitts 22, die näher zum Spitzenabschnitt 23 als zum Basisabschnitt 21 positioniert ist.

In Fig. 5 ist ein viertes Beispiel eines Verbindungselements 100 dargestellt. Im Beispiel der Fig. 5 kann jede Rille 2 eine anderen Rillendurchmesser 2d aufweisen, während der Rippendurchmesser 1d für alle Rippen gleich sein kann. Insbesondere kann sich der Rillendurchmesser 2d in axialer Richtung Z für aufeinander folgende Rillen 2 stetig reduzieren bzw. verjüngen. Der (Innen-)Durchmesser des Schafts 20 kann eine konische Form aufweisen. Der Rippenvorsprung 1h der Rippen 1 kann in axialer Richtung Z für aufeinander folgende Rippen 1 zunehmen, insbesondere stetig zunehmen. Dadurch können die Rillen 2, die näher am Spitzenabschnitt 23 positioniert sind und tiefer in die zumindest zwei Werkstücke eindringt, mehr verformtes Material der Werkstücke aufnehmen als Rillen 2, die näher am Basisabschnitt 21 positioniert sind. Somit kann der Eindringwiderstand des Verbindungselements 100 in die zwei Werkstücke reduziert werden.

In Fig. 6 ist ein fünftes Beispiel eines Verbindungselements 100 dargestellt. Im Beispiel der Fig. 6 kann der Rippenabschnitt 22, eine Rippe 1 und/oder jede seiner Rippen 1 ein asymmetrisches Rippenprofil, insbesondere eine Sägezahnform, aufweisen. Wie im kreisrunden Vergrößerungsabschnitt näher dargestellt, kann eine erste Flanke der Rippe 1 dem Basisabschnitt 21 bzw. dem Kopf 10 zugewandt sein und eine zweite Flanke dem Spitzenabschnitt 23 zugewandt sein. Ferner ist die Ebene gestrichelt eingezeichnet, in der der Rippenvorsprung 1h seine maximale Ausdehnung hat. Im Längsschnitt der Fig. 6 schneiden die erste Flanke und die zweite Flanke sich sowie die Ebene. Dabei kann die erste Flanke steiler auf die Ebene treffen als die zweite Flanke. Mit anderen Worten kann die erste Flanke einen ersten Winkel α mit der Ebene bilden und die zweite Flanke kann einen zweiten Winkel β mit der Ebene bilden. Der erste Winkel α kann größer sein als der zweite Winkel β. Alternativ, wie in Fig. 7 dargestellt, kann der erste Winkel α kleiner sein als der zweite Winkel β. Bei einem symmetrischen Rippenprofil, wie bspw. in den Fig. 1, 1a und 2b, können der erste Winkel α und der zweite Winkel β gleich groß sein.

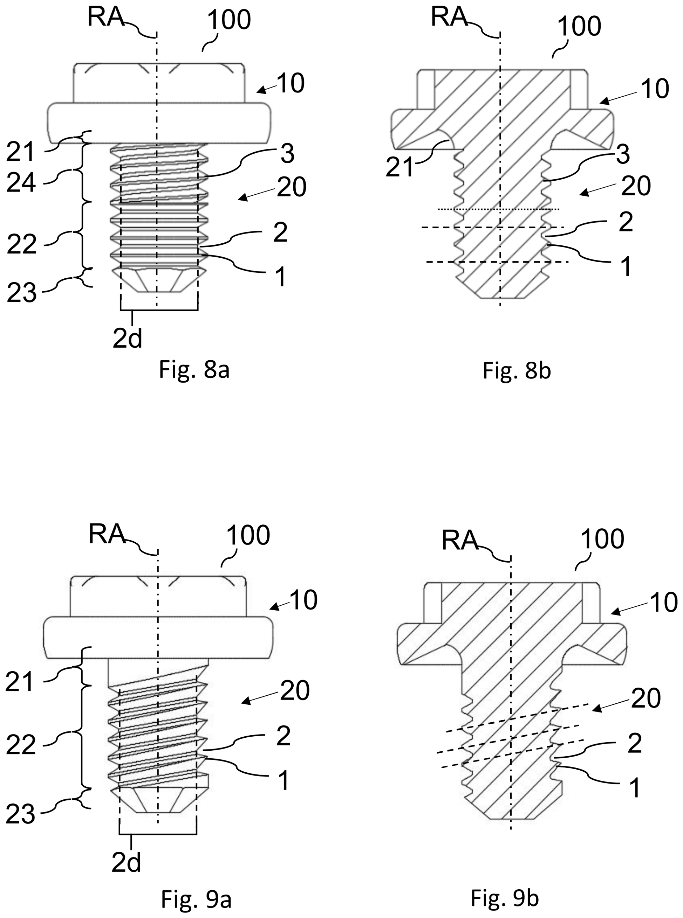

In den Figs. 8a und 8b ist ein siebtes Beispiel eines Verbindungselements 100 dargestellt. Im Unterschied zu allen anderen beschriebene Beispielen gemäß Ausführungsformen der Offenbarung kann das Verbindungselement 100 einen Schaft 20 aufweisen, der neben den Rippenabschnitt 22 auch eine Gewindeabschnitt 24 aufweist. Der Gewindeabschnitt 24 kann ein Gewinde aufweisen, insbesondere ein Außengewinde, also eine einzige Rille umfassen. Der Rippenabschnitt 22 kann wie mit Bezug zu den Figs. 1-7, 9a und 9b beschrieben ausgestaltet sein. Der Rippenabschnitt 22 kann näher zum Spitzenabschnitt 23 positioniert sein als der Gewindeabschnitt 24. Mit anderen Worten kann der Rippenabschnitt 22 sich vom Gewindeschnitt 24 in axialer Richtung Z erstrecken.

In Fig. 8b ist ein zur Fig. 8a korrespondierender Längsschnitt gezeigt, in dem der Übergang vom Gewindeabschnitt 24 zum Rippenabschnitt 22 durch eine Punktlinie gekennzeichnet ist. Ferner ist eine Auswahl der parallelen Ebenen, in der die Rippen 1 den Schaft 20 umgeben, durch eine gestrichelte Linien gekennzeichnet.

In den Figs. 9a und 9b ist ein achtes Beispiel eines Verbindungselements 100 dargestellt. Im Beispiel der Fig. 9a sind die parallelen Ebenen, in der die Rippen 1 den Schaft 20 umlaufen, gegenüber dem Kopf 10 geneigt. Die Rippen 1 bzw. deren entsprechende Ebenen können einen Winkel ungleich 90° mit der Rotationsachse RA bilden. Die Rotationsachse RA kann die Ebenen der Rippen in einem Winkel ungleich 90° schneiden. Anders als in einem Gewinde, ist jede Rippe 1 in einer eigenen Ebene ausgebildet, wobei die Rippen 1 bzw. die Ebenen parallel zueinander positioniert sind. Eine Auswahl dieser Ebenen ist in dem Längsschnitt der Fig. 9b durch gestrichelte Linien gekennzeichnet. Der Rillendurchmesser 2d kann im Rippenabschnitt 22 der Figs. 9a, 9b in axialer Richtung Z konstant sein. Der Übersichthalber ist die axiale Richtung in den Fig. 4- 9a und 9b nicht gekennzeichnet - sie ergibt sich jedoch in Analogie zur Fig. 1.

In den Beispielen der Figs. 1-7, 9a und 9b kann der Rippenabschnitt 22 den Schaft 20 zwischen dem Spitzenabschnitt 23 und dem Basisabschnitt 21 vollständig abdecken. Der Schaft 20 kann dadurch vollständig gewindefrei sein.

Obwohl einzelne Merkmale des Rippenabschnitts 22 in unterschiedlichen Beispielen des Verbindungselements 100 beschrieben sind, kann ein Verbindungselement 100 Kombinationen der beschriebenen Merkmale aufweisen. So können die Rippen 1 der Fig. 4 und 5 im Längsschnitt eine Rundform aufweisen. Ferner kann die Sägezahnform der Figs. 6 und 7 mit abwechselnden Rillenbreiten 2w, 2w' gemäß Fig. 4 kombiniert sein und/oder einen variierenden Rillendurchmesser gemäß Fig. 5 aufweisen.

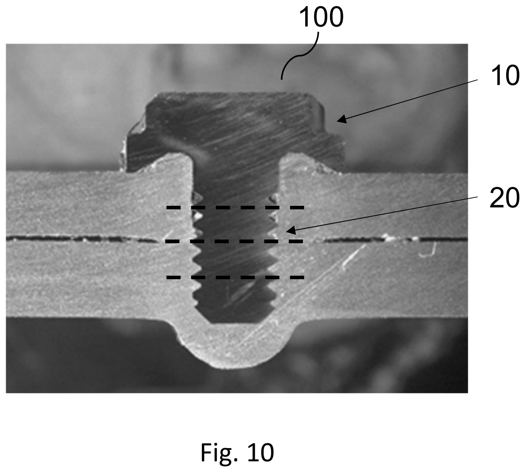

In Fig. 10 ist eine Aufnahme (Foto) eines Längsschnitts durch ein Verbindungselement 100 nach dessen Verwendung in einem Verfahren gemäß Ausführungsformen der Offenbarung dargestellt.

In einem ersten Schritt wurde ein erstes Werkstück, ein zweites Werkstück und ein Verbindungselements 100 (wie vorstehend beschrieben) bereitgestellt. Das erste Werkstück und das zweite Werkstück können flächige Werkstücke sein, wie in Fig. 10 gezeigt. Das erste Werkstück kann auf dem zweiten Werksrück aufliegen. Keines der Werkstücke hatte ein Loch oder irgendeine Aussparung an der Verbindungsstelle wie in Fig. 10 gezeigt.

In einem zweiten Schritt wurde das Verbindungselements 100 auf eine Oberfläche des ersten Werkstücks aufgesetzt. Das Verbindungselement 100 kann durch ein Fügewerkzeug, insbesondere mittels eines Niederhalters, auf das erste Werkstück angesetzt bzw. aufgesetzt werden. Dadurch kann das Verbindungselement 100 die Oberfläche des ersten Werkstücks direkt kontaktieren. Das Ansetzen des Verbindungselement 100 kann einseitig erfolgen, also ohne eine Hilfsstruktur oder dergleichen auf der gegenüberliegenden Seite des zweiten Werkstücks.

In einem dritten Schritt wurde das Verbindungselement 100 in eine Rotationsbewegung mit einer vorbestimmten Drehzahl versetzt. Aufgrund des direkten Kontakts zwischen dem Verbindungselement 100 und dem ersten Werkstück und einer daraus resultierenden Reibungskraft erwärmt sich das erste Werkstück in Folge der Rotation. Als Prozesstemperatur kann eine Erwärmung des ersten Werkstücks auf maximal 300° C vorgesehen sein.

In einem vierten Schritt wurde eine vorbestimmte axiale Kraft auf das Verbindungselement 100 in Richtung der Oberfläche des ersten Werkstücks ausgeübt. Dadurch kann das Verbindungselement 100 in das erste Werkstück, und anschließend in das zweite Werkstück gedrückt werden. Beispielhafte Bereiche für die vorbestimmte Drehzahl und die vorbestimmte axiale Kraft können z. B. der DE 10 2024 110 303 A1 entnommen werden.

Das Verbindungselement 100 wurde noch nicht vollständig durch das zweite Werkstück gedrückt. Stattdessen hat sich eine Ausbeulung gebildet, sodass der Schaft 20 des Verbindungselements 100 vollständig in den zwei Werkstücken eingebettet ist.

Durch das erfindungsgemäße Verbindungselement werden bei einem lochbildenden Verbindungsverfahren von Haus aus kürzere Späne erzeugt als bei einem Verbindungselement, bei dem sich ein Gewinde an den Spitzenabschnitt anschließt. Weder die mehreren Rippen 1 noch die dazwischen ausgebildeten Rillen 2 weisen eine Spiralform auf. Dadurch kann eine Spanfläche, wie bspw. bei einem Gewinde, vermieden werden, sodass fadenförmige Materialreste reduziert werden, und damit das Risko, dass sich das Verbindungselement schwingungsbedingt lösen kann oder manipuliert werden kann.

## Patentansprüche

1. Verbindungselement (100) zum Verbinden von zwei Werkstücken, das Verbindungselement (100) umfassend einen Kopf (10); und einen Schaft (20), der sich von einer Unterseite des Kopfes (10) erstreckt, wobei der Schaft (20):
einen Basisabschnitt (21) aufweist, der sich von der Unterseite des Kopfes (10) erstreckt;
einen Spitzenabschnitt (23) aufweist, der ein dem Kopf (10) gegenüberliegendes Ende des Schafts (12) bildet; und
einen Rippenabschnitt (22) zwischen dem Basisabschnitt (12) und dem Spitzenabschnitt (23), wobei der Rippenabschnitt (22) mehrere Rippen (1) aufweist.

2. Verbindungselement (100) nach Anspruch 1, wobei jede Rippe (1) des Rippenabschnitts (22) in jeweils einer Ebene den Schaft (20) umgibt und/oder rechtwinklig zu einer Schaftsachse verläuft.

3. Verbindungselement (100) nach einem der vorstehenden Ansprüche, wobei jede Rippe (1) des Rippenabschnitts (22) einen konstanten Rippenvorsprung (1h) und/oder konstanten Rippendurchmesser (1d) aufweist.

4. Verbindungselement (100) nach einem der vorstehenden Ansprüche, wobei die Rippen (1) jeweils parallel zueinander ausgebildet sind und/oder Ebenen, in denen die Rippen (1) den Schaft (20) umlaufen, jeweils parallel zueinander sind.

5. Verbindungselement (100) nach einem der vorstehenden Ansprüche, wobei der Rippenabschnitt (22) zumindest 30% des Schafts (20) bedeckt, vorzugsweise 50% des Schafts (20) bedeckt.

6. Verbindungselement (100) nach einem der vorstehenden Ansprüche, wobei ferner aufweisend einen Gewindeabschnitt (24), der zwischen dem Rippenabschnitt (22) und dem Basisabschnitt (21) angeordnet ist.

7. Verbindungselement (100) nach einem der vorstehenden Ansprüche, wobei die Rippen (1) ein asymmetrisches Rippenprofil aufweisen.

8. Verbindungselement (100) nach einem der vorstehenden Ansprüche, wobei der Rippenabschnitt (22) in einem Längsschnitt eine Trapezform aufweist.

9. Verbindungselement (100) nach einem der vorstehenden Ansprüche, wobei zwischen jeweils zwei Rippen (1) eine umlaufende Rille (2) ausgebildet ist, wobei jede Rille (2) eine konstante Rillentiefe aufweist, wobei die Rillentiefen entlang einer axialen Richtung (Z) des Schafts (22) variieren, insbesondere in Richtung des Spitzenabschnitts (23) zunehmen.

10. Verbindungselement (100) nach einem der vorstehenden Ansprüche, wobei der Rippenabschnitt (22) einen Bereich zwischen dem Basisabschnitt (21) und dem Spitzenabschnitt (23) vollständig bedeckt.

11. Verbindungselement (100) nach einem der vorstehenden Ansprüche, wobei die Rippen (1) in einem Längsschnitt eine erste runde Form aufweisen und/oder Rillen (2) in dem Längsschnitt zwischen den Rippen (1) eine zweite runde Form aufweisen, wobei die zweite runde Form eine der ersten runden Form entgegengesetzten Krümmung aufweist und/oder wobei die erste runde Form und die zweite runde Form eine betragsmäßig identische Krümmung aufweisen.

12. Verbindungselement (100) nach einem der vorstehenden Ansprüche, wobei zwischen jeweils zwei Rippen (1) eine Rille (2) mit einer ersten Rillenbreite (2w) ausgebildet ist, wobei zumindest eine der Rillen (2) eine zweite Rillenbreite (2w') aufweist, die größer als die erste Rillenbreite (2w) ist, wobei eine der Rillen (2) mit der zweiten Rillenbreite (2w') vorzugsweise den Spitzenabschnitt (23) mit dem Rillenabschnitt (22) verbindet.

13. Verbindungselement (100) nach einem der vorstehenden Ansprüche, wobei eine Rotationsachse (RA) des Verbindungselements (100) die Ebenen der Rippen (1) senkrecht oder in einem Winkel ungleich 90° schneidet.

14. Verfahren zum Erzeugen einer lochbildenden Verbindung von zwei Werkstücken, insbesondere Fließlochfügeverfahren, das Verfahren umfassend:
Bereitstellen eines ersten Werkstücks, eines zweiten Werkstücks und eines Verbindungselements (100) gemäß einem der vorherigen Ansprüche;
Aufsetzen des Verbindungselements (100) auf eine Oberfläche des ersten Werkstücks;
Rotieren des Verbindungselements (100) mit einer vorbestimmten Drehzahl; und
Ausüben einer vorbestimmten axialen Kraft auf das Verbindungselement (100) in Richtung der Oberfläche des ersten Werkstücks.
